Europäisches Patentamt

European Patent Office

Office européen des brevets

(19)

(11) Veröffentlichungsnummer: **0 223 004 B1**

# EUROPÄISCHE PATENTSCHRIFT

(12)

(45) Veröffentlichungstag der Patentschrift: 27.02.91

(51) Int. Cl.5: **A01F 29/00**, A01F 29/06

(21) Anmeldenummer: 86112613.4

(22) Anmeldetag: 12.09.86

(54) **Verfahrbares Zerkleinerungs- und Austragsgerät für Silageblöcke.**

(30) Priorität: 18.11.85 DE 3540862

(43) Veröffentlichungstag der Anmeldung:
27.05.87 Patentblatt 87/22

(45) Bekanntmachung des Hinweises auf die
Patenterteilung:
27.02.91 Patentblatt 91/09

(84) Benannte Vertragsstaaten:
BE DE FR GB IT NL

(56) Entgegenhaltungen:
DE-A- 1 481 094
DE-A- 3 516 861
US-A- 3 863 850
US-A- 4 170 426

(73) Patentinhaber: De Dissel Beheer B.V.
Dinxperloosestraatweg 88
NL-7122 AA Aalten(NL)

(72) Erfinder: Ansink, Jan Christiaan
Dinxperlosestraatweg 143
NL-7120 AA Aalten(NL)

(74) Vertreter: Schulze Horn, Stefan, Dipl.-Ing.
M.Sc.
Goldstrasse 36
D-4400 Münster(DE)

## Beschreibung

Die Erfindung betrifft ein verfahrbares Zerkleinerungs- und Austragsgerät für Silageblöcke, mit einem Fahrgestell mit mindestens einer Achse mit Rädern und mit einer mitsamt einem Silageblock von einer Grundstellung in eine Ladestellung hochschwenkbaren Ladeklappe, aus der der Silageblock mittels Schwerkraft gegen eine rotierende Zinkenwalze mit Zinken und/oder Kratzstegen verschiebbar ist, mittels welcher der Block fortschreitend zerkleinerbar und das zerkleinerte Silagegut über Kopf in einen Austragbereich förderbar ist, von wo aus das Silagegut seitlich austragbar ist.

Ein derartiges Gerät ist aus der DE-OS 33 16 864.4 des Anmelders bekannt und dient dazu, aus einem Fahrsilo ausgeschnittene Silageblöcke aufzunehmen, zu transportieren, zu zerkleinern und schließlich das zerkleinerte Silagegut zu Fütterungszwecken in Futtertröge in einer Stallung auszutragen. Bei dem bekannten Gerät erfolgt die Zerkleinerung des Silageblockes durch die rotierende Zinkenwalze im Zusammenwirken mit von oben her gabelartig zwischen die Zinken der Walze ragenden, am Aufbau des Gerätes starr befestigte Zinken. Bei der Verarbeitung von kurzfaserigem oder körnigem Silagegut, z.B. Mais-Silage, hat sich das Gerät durchaus bewährt. Nachteilig ist jedoch bei dem bekannten Gerät, daß es bei der Verarbeitung von faserigem Silagegut, z.B. Gras-Silage mit Faserlängen von etwas über 10 cm, wie sie bei Grasschnitt üblich sind, zu einem zunehmenden Festsetzen von Silagegut an der Zinkenwalze kommen kann, was im schlimmsten Fall zu einem Blockieren der Walze führt.

Aus der DE-OS 35 16 861 ist ein Abroll- und Auflockerungsgerät für Rundballen aus faserigen Substanzen bekannt, bei dem ein Rundballen mittels mehrerer gleichdrehsinnig rotierender, mit Zinken versehener Bodenwalzen in Drehung versetzt wird. Eine weitere, schräg oberhalb dieser Bodenwalzen angeordnete Zinkenwalze, dort Zupfwalze genannt, deren Zinken teilweise zwischen die Zinken der schräg darunter liegenden Bodenwalze greifen, rotiert mit höherer Geschwindigkeit, zerkleinert dadurch das bereits durch die Bodenwalzen aufgelockerte Ballengut und befördert es über Kopf aus dem Gerät.

Bei diesem Gerät besteht, wie auch bei dem in der DE-OS 33 16 864.4 beschriebenen, die Gefahr, daß aufgrund der langfaserigen Beschaffenheit des Ballengutes die Zupfwalze zugesetzt wird und blokkiert. Es ist dann jedes Mal eine aufwendige Entladung des Gerätes sowie eine Säuberung der Walzen von Hand erforderlich. Das Blockieren der Walze führt leicht zu Schäden an Lagern und Antriebselementen der Walze, was zu häufigeren Reparaturen mit erhöhten Kosten führt.

Es stellt sich daher die Aufgabe, ein verfahrbares Zerkleinerungs-und Austragsgerät der eingangs genannten Art zu schaffen, das die genannten Nachteile vermeidet und insbesondere eine problemlose, störungsfreie und zuverlässige Verarbeitung sowohl von kleinfaserigem, körnigem Material wie Mais-Silage, als auch von langfaserigem Material wie Gras-Silage, erlaubt und einfach und kompakt aufgebaut ist.

Die Lösung dieser Aufgabe gelingt erfindungsgemäß durch ein verfahrbares Zerkleinerungs- und Austragsgerät der eingangs genannten Art dadurch, daß oberhalb oder in Förderrichtung schräg oberhalb der ersten Zinkenwalze eine zweite, im gleichen Drehsinn rotierende Zinkenwalze angeordnet ist, daß die Zinken der zweiten Zinkenwalze wenigstens teilweise zwischen die Zinken der ersten Zinkenwalze greifen und daß die erste Zinkenwalze mit einem Schritt-Drehantrieb ausgestattet ist.

Zwar sind die beiden zuerst genannten Merkmale vorliegender Erfindung einzeln aus dem Stand der Technik bereits bekannt, jedoch ermöglicht es erst ihre Kombination sowie die Ausstattung der ersten Zinkenwalze mit einem Schritt-Drehantrieb die störungsfreie, problemlose und zuverlässige Verarbeitung sowohl von grobkörnigem, wie auch von langfaserigem Silagegut.

Mit der Anordnung einer zweiten Zinkenwalze in der oben angegebenen Art wird vorteilhaft erreicht, daß das Silagegut, das von der ersten Zinkenwalze von einem Silageblock gelöst und über Kopf abtransportiert wird, von Zinken der zweiten Zinkenwalze erfaßt wird, sobald es sich in einer unzuträglichen Dicke bzw. Höhe an der ersten Zinkenwalze festgesetzt hat. Da sich die Zinken der beiden gleichsinnig rotierenden Walzen im Überschneidungsbereich ihre Wirkungsbereiche gegeneinander bewegen, wird an der ersten Walze bzw. an deren Zinken festgesetztes Silagegut zuverlässig erfaßt und gelöst. Danach fällt das gelöste Silagegut zum einen Teil in gelokkerter Form wieder auf die erste Walze zurück und zum anderen Teil wird es von der zweiten Walze über Kopf weitertransportiert und fällt dann in den Austragbereich, wohin auch das von der ersten Walze transportierte Silagegut gelangt, das nicht von den Zinken der zweiten Walze erfaßt wurde. Bei der Zerkleinerung von kleinfaserigem, körnigem Silagegut wird letzteres im wesentlichen von der ersten Walze bzw. deren Zinken und den daran angebrachten Kratzblechen oder Stegen transportiert, ohne daß die Zinken der zweiten Walze intensiv zur Wirkung kommen. Dies liegt daran, daß, wie eingangs erwähnt, derartiges Silagegut weniger zum Festsetzen neigt. Um ein solches Festsetzen sicher zu verhindern, ist die erste Zinkenwalze vorteilhaft mit einem Schritt-Drehantrieb ausgestattet, welcher es ermöglicht, daß der zweiten Zinkenwalze immer genügend Zeit verbleibt, etwaig an der ersten Zinkenwalze festsitzendes Silagegut zu lösen und zu lockern, bevor es zu einem Blockieren einer der Walzen kommen kann. Demgegenüber trägt die zweite Walze mit ihren Zinken bei der Verarbeitung von langfaserigem Silagegut sehr wesentlich zur Lockerung und zum Transport des vom Silageblock gelösten Silagegutes und damit zu einer wirkungsvollen und störungsfreien Funktion des Gerätes bei.

Eine bevorzugte Ausführungsform des Schritt-Drehantriebes der ersten Zinkenwalze besteht darin, daß diese aus zumindest einer über einen Exzenter hin- und herbewegten Stange besteht, die mit ihrem exzenterabgewandten

Ende auf einen Hebel wirkt, der mit einseitigem Freilauf mit einer die erste Zinkenwalze tragenden Welle mit Rücklaufsperre gekuppelt ist. Ein solcher Antrieb ist in der Lage, ein sehr großes Drehmoment zu erzeugen. Dieses ist erforderlich, da die zu verarbeitenden Silageblöcke relativ schwer und stark gepreßt sind, so daß das Silagegut einen sehr festen Zusammenhalt hat. Zugleich ist ein derartiger Antrieb sehr robust. Durch die erwähnte Rücklaufsperre wird ein Zurückdrehen der Walze infolge des Gewichtes des auf sie wirkenden Silageblockes verhindert, der unter Umständen während der schrittweisen Rotationsbewegung der ersten Walze von dieser etwas angehoben wird.

Der Durchmesser der zweiten Zinkenwalze beträgt vorzugsweise etwa das 0,4 - 0,7-fache des Durchmessers der ersten Zinkenwalze. Der Durchmesser der ersten Zinkenwalze ist bekanntermaßen durch die Tiefe des Silageblockes festgelegt; er muß zumindest einen dieser Tiefe entsprechenden Durchmesser haben. Der angegebene Durchmesserbereich für die zweite Walze ergibt zum einen eine kompakte Gesamtform des Gerätes und stellt zum anderen zur Vermeidung von Funktionsstörungen sicher, daß die Dimensionen der zweiten Walze deutlich größer sind, als die maximal auftretenden Längen von Fasern des Silagegutes.

Für eine gründliche Lösung und Lockerung des Silagegutes, insbesondere von langfaserigem Material, ist es zweckmäßig, daß die Rotation der zweiten Zinkenwalze mit einer Drehzahl erfolgt, die ein Vielfaches der Drehzahl der ersten Zinkenwalze beträgt. Außerdem wird hierdurch die Lösung des Silagegutes von der zweiten Zinkenwalze von den erzeugten Zentrifugalkräften unterstützt. Um zu vermeiden, daß hierbei das Silagegut unkontrolliert herumfliegt, ist ein oberhalb der zweiten Zinkenwalze angeordnetes, diese mit Abstand abdeckendes Silagegut Leitblech vorgesehen. Dieses sorgt dafür, daß das sich von der zweiten Zinkenwalze lösende Silagegut zuverlässig und vollständig in den Austragbereich gelangt. Gleichzeitig verhindert dieses Leitblech, das zugleich eine der Begrenzungen der Zuführöffnung für den Silageblock bildet, ein zu weites Anheben des Silageblockes durch die erste Zinkenwalze.

Vorteilhafte Ausführungen der Walzenantriebe ergeben sich aus den Unteransprüchen 7 bis 9.

Zur Anpassung an unterschiedliche Eigenschaften von Silageblöcken ist vorgesehen, daß die Schrittgröße des Schritt-Drehantriebes der ersten Zinkenwalze einstellbar ist.

Eine weitere Vereinfachung und zugleich Steigerung der Funktionssicherheit des erfindungsgemäßen Gerätes gegenüber dem Stand der Technik wird dadurch erreicht, daß das Schwenklager der verschwenkbaren Ladeklappe unmittelbar außerhalb des Arbeitsbereiches der Zinken der ersten Zinkenwalze angeordnet ist. Bei dieser Lage des Schwenklagers kann das die erste Zinkenwalze unterseitig umgebende Abdeckblech dicht an der Walze entlanggeführt sein und es wird so sicher verhindert, daß ein Teil des Silageblockes oder Silagegut nach unten zwischen die erste Zinkenwalze und das diese unterseitig umgebende Abdeckblech rutscht. Somit werden Betriebsstörungen ausgeschlossen, wie sie bei der früheren Ausführung infolge eines keilförmig zulaufenden Zwischenraumes zwischen erster Walze und unterseitigem Abdeckblech auftreten konnten.

Eine einfache Konstruktion und eine günstige Verteilung der auftretenden Kräfte für die Verschwenkung der Ladklappe wird dadurch erreicht, daß die verschwenkbare Ladeklappe durch je einen außenseitig angeordneten Hydraulik-Zylinder betätigbar ist, dessen unteres Ende im Bereich der Achse mit dem Fahrgestell verbunden ist und dessen oberes Ende im Abstand vom Schwenklager mit der Ladeklappe verbunden ist.

Ein bevorzugtes Ausführungsbeispiel der Erfindung wird im folgenden anhand einer Zeichnung näher erläutert. Die Figuren der Zeichnung zeigen im einzelnen:

Figur 1     ein Zerkleinerungs- und Austragsgerät für Silageblöcke gemäß der vorliegenden Erfindung, in Seitenansicht, teils in Durchsicht, mit nach unten verschwenkter. Ladeklappe und

Figur 2     das Gerät aus Figur 1 in gleicher Darstellung, mit nach oben verschwenkter Ladeklappe.

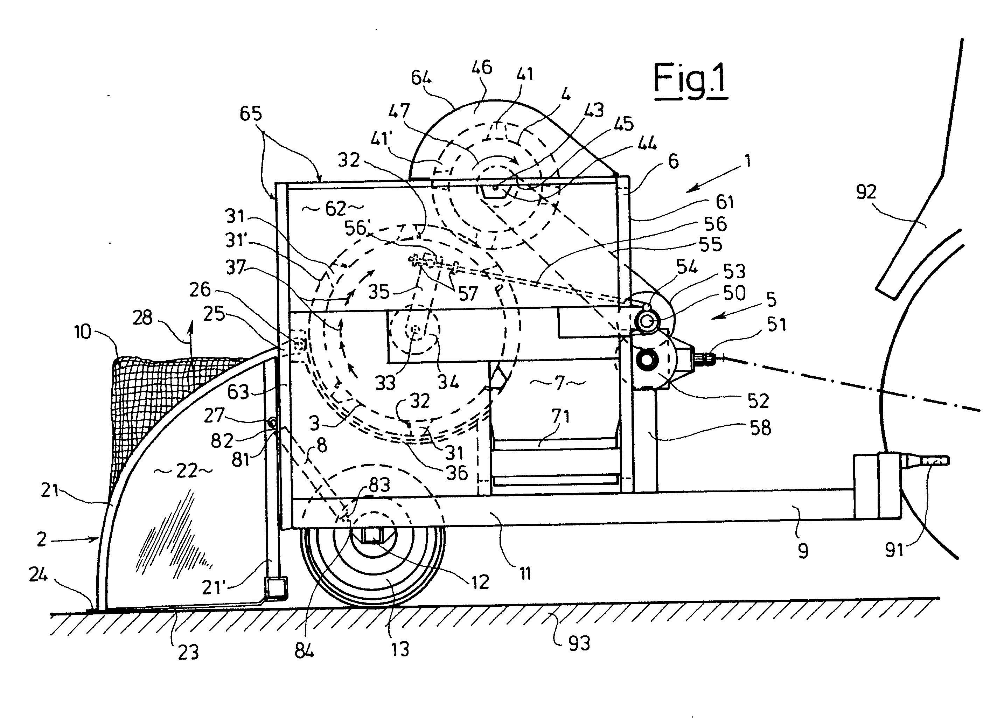

Wie die Figur 1 zeigt, besteht das dargestellte Ausführungsbeispiel des erfindungsgemäßen Zerkleinerungs- und Austragsgerätes 1 für Silageblöcke 10 im wesentlichen aus einem Fahrgestell 11, einem darauf angeordneten Aufbau 6 und einer daran angelenkten Ladeklappe 2. Das Fahrgestell 11 weist eine Achse 12 mit Rädern 13 auf, die zur Fortbewegung des Gerätes 1 dienen. Das Fahrgestell 11 setzt sich in einer Deichsel 9 fort, die an ihrem freien Ende einen Kupplungskopf 31 zur Verbindung des Gerätes 1 mit einem Traktor 92 trägt.

Der auf dem Fahrgestell 11 angeordnete Aufbau 6 besteht außenseitig aus einer Stirnwand 61, einer Rückwand 63, Seitenwänden 62 und einer oberseitigen Abdeckung 64. Die oberseitige Abdeckung 64 sowie die Rückwand 63 sind unvollständig ausgeführt, wodurch sich eine sich schräg nach hinten öffnende Zufuhröffnung 65 ergibt. Im Inneren des Aufbaues 6 des Gerätes 1 sind als wesentliche Teile zwei Zinkenwalzen 3 und4 angeordnet. Die erste Zinkenwalze 3 begrenzt die Zufuhröffnung 65 zum Geräteinneren hin, während die zweite Zinkenwalze 4 oberhalb der ersten Walze 3 und etwas zur Frontwand 61 versetzt angeordnet ist. Die erste Zinkenwalze 3 trägt, wie der Name schon sagt, auf ihrem Umfang mehrere Zinken 31, vor die jeweils ein Kratzsteg 32 gesetzt ist. Auch die zweite Zinkenwalze 4 trägt auf ihrem Umfang mehrere Zinken 41. Der Drehsinn der beiden Zinkenwalzen 3 und 4, angedeutet durch die Pfeile 37 und 47, ist gleich und so gerichtet, daß sich jeweils die obere Hälfte der Walzen 3 und 4 zur Frontwand 61 hin bewegt. Die Wirkungsbereiche 31' und 41' der Zinken 31 bzw. 41 der beiden Walzen 3 und 4 überschneiden sich teilweise. Die erste Zinkenwalze 3 ist auf einer Welle 33 in einem Lager 34 gelagert. Dieses Lager 34 ist mit einer Rücklaufsperre ausgestattet, und die Welle 33 bzw. die Walze 3 ist mit einem Hebel 35 derart gekuppelt, daß ein einseitiger Freilauf besteht. Der Hebel 35 ist seinerseits mit einer Stange 56 verbunden, die durch einen Exzenter 54 in eine hin- und hergehende Bewegung versetzbar ist. Durch diese Hin- und Herbewegung der Stange 56 wird die erste Walze 3, wie durch die Anzahl der kurzen Pfeile 37 angedeutet, schrittweise weitergedreht. Das Maß der Bewegung des Hebels 35 und damit die Schrittweite der Drehbewegung der Walze 3 kann durch Versetzen von Anschlägen 57 auf dem freien Ende 56' der Stange 56 unabhängig von deren Bewegungsgröße variiert werden. Je näher die Anschläge 57 an dem Hebel 35 anliegen, desto größer wird die Bewegung des Hebels 35, während bei größerem Abstand der Anschläge 57 vom Hebel 35 das hebelseitige Ende 56' der Stange 56 über einen Teil ihrer Bewegung frei im Hebel 35 gleitet, ohne diesen mitzunehmen. Die zweite Zinkenwalze 4 ist ebenfalls auf einer Welle 43 in einem Lager 44 gelagert. An die zweite Walze 4 ist ein Kettenrad 45 angeflanscht, das über eine Kette 55 in Drehung versetzt wird. Die Kette 55 wird ihrerseits durch ein Kettenrad 53 bewegt, das zusammen mit dem bereits erwähnten Exzenter 54 auf einer gemeinsamen Welle 50 angeordnet ist.

Der Antrieb der Welle 50 erfolgt unter Zwischenschaltung eines Umlenkgetriebes 52 von einem Zapfwellenanschluß 51 aus, der mit dem Zapfwellenausgang des Traktors 92 verbindbar ist. Letztgenannte Teile bilden zusammen eine Getriebeeinheit 5, die vor der Stirnwand 61 des Aufbaues 6 des Gerätes 1 auf einem Träger 58 angeordnet ist.

Der vordere Teil des Inneren des Aufbaues 6 des Gerätes 1 bildet einen Austragbereich 7, durch welchen das zerkleinerte Silagegut herabfällt auf ein quer im Gerät 1 verlaufendes Förderband 71, das in seiner Laufrichtung zweckmäßigerweise umschaltbar ist und einen Austrag des Silagegutes wahlweise nach links oder rechts z. R. in Futtertröge bewirkt.

Die erste Zinkenwalze 3 ist unterseitig von einem Abdeckblech 36 unter Ausbildung eines möglichst kleinen Zwischenraumes umgeben, um ein Eindringen von Teilen des Silageblockes 10 oder von bereits zerkleinertem Silagegut zwischen die Walze 3 und das unterseitige Abdeckblech 36 zu verhindern. Die zweite Zinkenwalze 4 ist oberseitig mit einer als Silagegut-Leitblech ausgebildeten Abdeckung 64 versehen. Diese Abdeckung 64 ist unter Ausbildung eines Zwischenraumes 46 mit Abstand vom Wirkungsbereich 41' der Zinken 41 der Walze 4 angeordnet, um einen ungehinderten Durchtritt von Silagegut zu gewährleisten.

An der Rückseite bzw. Rückwand 63 des Aufbaues 6 des Gerätes 1 ist die verschwenkbare Ladeklappe 2 mit einem kurzen Schwenkarm 25 in einem Schwenklager 26 angelenkt. Das Schwenklager 26 ist unmittelbar außerhalb des Wirkungsbereiches 31' der ersten Zinkenwalze 3 angeordnet, um eine möglichst günstige Zuführungsrichtung des Silageblockes 10 zu dieser Walze 3 zu erreichen. Die Ladeklappe 2 wird im wesentlichen aus einem Rahmen, bestehend aus einer parallel zur Rückwand 63 des Gerätes 1 verlaufenden Strebe 21' sowie einer in Verlängerung des Schwenkarmes 25 verlaufenden, leicht gebogenen, an ihrem unteren Ende etwa senkrecht zum Untergrund 93 verlaufenden zweiten Strebe 21 gebildet, zwischen denen eine Seitenwand 22, vorzugsweise aus Blech, aufgespannt ist. Nach unten ist die Ladeklappe 2 durch einen in Grundstellung der Ladeklappe unter einem spitzen Winkel zum Untergrund 93 verlaufenden Boden 23 begrenzt, der an seiner Vorderkante 24, die auf dem Untergrund 93 aufliegt, mit einer Hartmetalleiste, vorzugsweise aus Mangan-Hartstahl, versehen ist.

Der im dargestellten Ausführungsbeispiel innerhalb der Ladeklappe 2 befindliche Silageblock 10 gelangt nach seinem Ausschneiden aus der Silagemasse eines Fahrsilos durch Zurücksetzen des Gerätes 1 dorthin. Zur weiteren Verarbeitung, d. h. zur Zerkleinerung und zum Austragen des zerkleinerten Silagegutes wird die Ladeklappe 2 mitsamt dem Silageblock 10 in Richtung des Pfeiles 28 nach oben verschwenkt. Diese Verschwenkung wird durch einen Hydraulikzylinder 8 bewirkt, der mit seinem unteren Ende 83 an einem Anlenkpunkt 84 in der Nähe der Achse 12 am Fahrgestell 11 angelenkt ist, und dessen oberes Ende 82 am Kolben 81 an einem Anlenkpunkt 27 am Rahmenteil 21' der Ladeklappe 2 angelenkt ist. Zur Erzeugung einer ausreichenden Schwenkkraft und für eine gleichmäßige Verteilung der auftretenden Kräfte ist zweckmäßig links und rechts am Gerät 1 je ein Hydraulikzylinder 8 angeordnet.

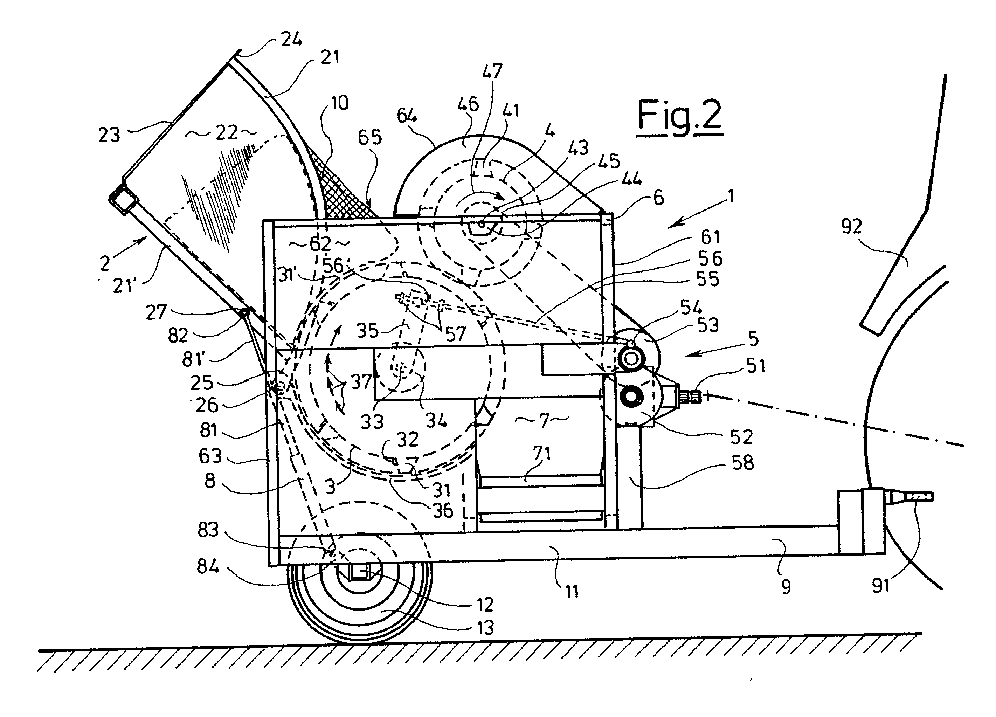

Die nach der Schwenkbewegung nach oben erreichte Stellung der Ladeklappe 2 und des Silageblockes 10 zeigt die Figur 2. Hier ist die Ladeklappe 2 mit dem darin befindlichen Silageblock um etwa 150 - 160° nach oben verschwenkt. Hierzu sind die Kolbenteilstücke 81 und 81' des im dargestellten Ausführungsbeispiel verwendeten Teleskop-Hydraulikzylinders 8 in ihre Ausfahrstellung gebracht. Das vorher etwa vertikal verlaufende Rahmenteil 21' der Ladeklappe 2 bildet nun eine schiefe Ebene, auf welcher der Silageblock 10 durch die Zufuhröffnung 65 gegen die erste Zinkenwalze 3 rutscht. Diese Walze 3 bzw. deren Zinken 31 und Kratzstege 32 zerkleinern den Silageblock 10 infolge der schrittweisen Drehung 37 der Walze 3 nach und nach. Ein Teil des vom Silageblock 10 gelösten Silagegutes wird unmittelbar von der Walze 3 in den Austragbereich 7 gefördert, während ein anderer Teil des Silagegutes von der zweiten Walze 4 über Kopf und durch den Zwischenraum 46 zum Austragbereich 7 gefördert wird. Im Austragbereich 7 fällt das zerkleinerte und gelockerte Silagegut auf das Querförderband 71, um von dort in links oder rechts vom Fahrzeug vorhandene Futtertröge ausgetragen zu werden.

**Ansprüche**

1. Verfahrbares Zerkleinerungs- und Austragsgerät (1) für Silageblöcke (10) mit einem Fahrgestell (11) mit mindestens einer Achse (12) mit Rädern (13) mit einer mitsamt einem Silageblock von einer Grundstellung in eine Ladestellung hochschwenkbaren Ladeklappe (2) aus der der Silageblock mittels Schwerkraft gegen eine rotierende Zinkenwalze (3) mit Zinken (31) und/oder Kratzstegen (32) verschiebbar ist, mittels welcher der Block fortschreitend zerkleinerbar und das zerkleinerte Silagegut über Kopf in einen Austragbereich (7) förderbar ist, von wo aus das Silagegut seitlich austragbar ist, dadurch gekennzeichnet,
   - daß oberhalb oder in Förderrichtung (37) schräg oberhalb der ersten Zinkenwalze (3) eine zweite, im gleichen Drehsinn (47) rotierende Zinkenwalze (4) angeordnet ist,
   - daß die Zinken (41) der zweiten Zinkenwalze (4) wenigstens teilweise zwischen die Zinken (31) der ersten Zinkenwalze (3) greifen und
   - daß die erste Zinkenwalze (3) mit einem Schritt-Drehantrieb (34, 35, 54, 56) ausgestattet ist.

2. Gerät nach Anspruch 1, dadurch gekennzeichnet, daß der Schritt-Drehantrieb der ersten Zinkenwalze (3) aus zumindest einer über einen Exzenter (54) hin- und herbewegten Stange (56) besteht, die mit ihrem exzenterabgewandten Ende (56') auf einen Hebel (35) wirkt, der mit einseitigem Freilauf (34) mit einer die erste Zinkenwalze (3) tragenden Welle (33) mit Rücklaufsperre gekuppelt ist.

3. Gerät nach wenigstens einem der Ansprüche 1 bis 2, dadurch gekennzeichnet, daß der Durchmesser der zweiten Zinkenwalze (4) etwa das 0,4 - 0,7-fache des Durchmessers der ersten Zinkenwalze (3) beträgt.

4. Gerät nach wenigstens einem der Ansprüche 1 bis 3, dadurch gekennzeichnet, daß die Rotation der zweiten Zinkenwalze (4) mit einer Drehzahl erfolgt, die ein Vielfaches der Drehzahl der ersten Zinkenwalze (3) beträgt.

5. Gerät nach wenigstens einem der Ansprüche 1 bis 4, dadurch gekennzeichnet, daß oberhalb der zweiten Zinkenwalze (4) ein diese mit Abstand abdeckendes Silagegut-Leitblech (64) angeordnet ist.

6. Gerät nach wenigstens einem der Ansprüche 1 bis 5, dadurch gekennzeichnet, daß die zweite Zinkenwalze (4) einen Kettenantrieb (45, 53, 55) aufweist.

7. Gerät nach wenigstens einem der Ansprüche 1 bis 6, dadurch gekennzeichnet, daß der Exzenter (54) für den Schritt-Drehantrieb der ersten Zinkenwalze (3) und das Kettenrad (53) für den Kettenantrieb der zweiten Zinkenwalze (4) auf einer gemeinsamen Welle (50) angeordnet sind.

8. Gerät nach wenigstens einem der Ansprüche 1 bis 7, dadurch gekennzeichnet, daß die gemeinsame Welle (50) unter Zwischenschaltung eines Getriebes (5) von einem Zugfahrzeug (92) aus antreibbar ist.

9. Gerät nach wenigstens einem der Ansprüche 1 bis 8, dadurch gekennzeichnet, daß die Schrittgröße (37) des Schritt-Drehantriebes (34, 35, 54, 56) der ersten Zinkenwalze (3) einstellbar ist.

10. Gerät nach wenigstens einem der Ansprüche 1 bis 9, dadurch gekennzeichnet, daß das Schwenklager (26) der verschwenkbaren Ladeklappe (2) unmittelbar außerhalb des Arbeitsbereiches (31') der Zinken (31) der ersten Zinkenwalze (3) angeordnet ist.

11. Gerät nach wenigstens einem der Ansprüche 1 bis 10, dadurch gekennzeichnet, daß die verschwenkbare Ladeklappe (2) durch je einen außenseitig angeordneten Hydraulik-Zylinder (8) betätigbar ist, dessen unteres Ende (83) im Bereich der Achse (12) mit dem Fahrgestell (11) verbunden ist und dessen oberes Ende (82) im Abstand vom Schwenklager (26) mit der Ladeklappe verbunden ist.

## Claims

1. A movable crushing and discharge apparatus (1) for silage blocks (10) with a chassis (11), with at least one axle (12), with wheels (13), and with a loading flap (2), which together with a silage block is able to be swung up from a base position into a loading position, from which flap the silage block is able to be moved by means of gravity towards a rotating toothed roller (3) with teeth (31) and/or scraping cross-pieces (32), by means of which the block is able to be progressively crushed and the crushed silage material is able to be conveyed overhead into a discharge region (7), from which the silage material is able to be discharged to the side,
characterized in that

  - above or in the conveying direction (37) obliquely above the first toothed roller (3) , a second toothed roller (4) is arranged rotating in the same direction of rotation (47),
  - the teeth (41) of the second toothed roller (4) engage at least partially between the teeth (31) of the first toothed roller (3) and
  - the first toothed roller (3) is equipped with a stepping rotary drive (34, 35, 54, 56).

2. An apparatus according to Claim 1, characterized in that the stepping rotary drive of the first toothed roller (3) consists of at least one rod (56) which is moved to and fro via an eccentric (54), which rod, with its end (56') facing away from the eccentric, acts upon a lever (35), which is coupled with a free-runniing arrangement (45), on one side, with a shaft (33) with back stop, carrying the first toothed roller (3).

3. An apparatus according to one of Claims 1 to 2, characterized in that the diameter of the second toothed roller (4) is approximately 0.4 - 0.7 times the diameter of the first toothed roller (3).

4. An apparatus according to at least one of Claims 1 to 3, characterized in that the rotation of the second toothed roller (4) takes place with a rotational speed which is a multiple of the rotational speed of the first toothed roller (3).

5. An apparatus according to at least one of Claims 1 to 4, characterized in that above the second toothed roller (4), a silage baffle (64) is arranged, which covers the latter at a distance.

6. An apparatus according to at least one of Claims 1 to 5, characterized in that the second toothed roller (4) has a chain drive (45, 53, 55).

7. An apparatus according to at least one of Claims 1 to 6, characterized in that the eccentric (54) for the stepping rotary drive of the first toothed roller (3) and the chain wheel (53) for the chain drive of the second toothed roller (4) are arranged on a common shaft (50).

8. An apparatus according to at least one of Claims 1 to 7, characterized in that the common shaft (50) is able to be driven from a drawing vehicle (92) with the interposition of a gear (5).

9. An apparatus according to at least one of Claims 1 to 8, characterized in that the extent of stepping (37) of the stepping rotary drive (34, 35, 54, 56) of the first toothed roller (3) is able to be adjusted.

10. An apparatus according to one of Claims 1 to 9, characterized in that the swivel bearing (26) of the sluable loading flap (2) is arranged immediately outside the range of action (31') of the teeth (31) of the first toothed roller (3).

11. An apparatus according to at least one of Claims 1 to 10, characterized in that the sluable loading flap (2) is able to be actuated by a hydraulic cylinder (8) arranged in each case on the outside, the lower end (83) of which is connected with the chassis (11) in the region of the axle (12), and the upper end (82) of which is connected with the loading flap at a distance from the swivel bearing (26).

**Revendications**

1. Machine mobile (1) de broyage et de distribution de balles d'ensilage (10) comprenant un châssis (11) avec au moins un essieu (12) et des roues (13) et un clapet de chargement (2) qui peut pivoter vers le haut avec une balle d'ensilage à partir d'une position initiale dans une position de chargement à partir de laquelle la balle d'ensilage peut être déplacée par force de gravité vers un cylindre à dents rotatif (3) qui comporte des dents (31) et/ou des racles (32) et à l'aide duquel la balle peut être progressivement broyée et la matière d'ensilage broyée peut être acheminée par le haut dans une zone de distribution (7) à partir de laquelle elle peut être évacuée latéralement, caractérisée en ce que
   - un deuxième cylindre à dents (4) tournant dans le même sens que le premier (3) est disposé au-dessus ou dans le sens de déplacement, en biais au-dessus du premier cylindre à dents (3),
   - les dents (41) du deuxième cylindre à dents (4) s'engagent au moins partiellement entre les dents (31) du premier cylindre à dents (3) et
   - le premier cylindre à dents (3) est équipé d'un dispositif d'entraînement en rotation pas à pas (34, 35, 54, 56,).

2. Machine selon la revendication 1, caractérisée en ce que le dispositif d'entraînement en rotation pas à pas du premier cylindre à dents (3) est composé d'au moins une tige (56) qui est déplacée selon un mouvement de va-et-vient par un excentrique (54) et agit par son extrémité éloignée de l'excentrique (56') sur un levier (35) qui, avec une roue libre unilatérale (34), est couplé à un arbre (33) portant le premier cylindre à dents (3) et présentant un dispositif de blocage de marche arrière.

3. Machine selon l'une au moins des revendications 1 et 2, caractérisée en ce que le diamètre du deuxième cylindre à dents (4) représente de préférence entre 0,4 et 0,7 fois le diamètre du premier cylindre à dents (3).

4. Machine selon au moins l'une des revendications 1 à 3, caractérisée en ce que la rotation du deuxième cylindre à dents (4) s'effectue à une vitesse qui est un multiple de la vitesse de rotation du premier cylindre à dents (3).

5. Machine selon au moins l'une des revendications 1 à 4, caractérisée en ce qu'une tôle de guidage de matière d'ensilage (64) est disposée au-dessus du deuxième cylindre à dents (4) et le recouvre à une certaine distance.

6. Machine selon au moins l'une des revendications 1 à 5, caractérisée en ce que le deuxième cylindre à dents (4) présente un dispositif d'entraînement à chaîne (45, 53, 55).

7. Machine selon au moins l'une des revendications 1 à 6, caractérisée en ce que l'excentrique (54) pour le dispositif d'entraînement en rotation pas à pas du premier cylindre à dents (3) et la roue à chaîne (53) pour le dispositif d'entraînement à chaîne du deuxième cylindre à dents (4) sont disposés sur un arbre commun §50).

8. Machine selon au moins l'une des revendications 1 à 7, caractérisée en ce que l'arbre commun (50) peut être entraîné par l'intermédiaire d'un engrenage (5) à partir d'un véhicule de traction (92).

9. Machine selon au moins l'une des revendications 1 à 8, caractérisée en ce que le pas (37) du dispositif d'entraînement pas à pas (34, 35, 54, 56) du premier cylindre à dents (3) est réglable.

10. Machine selon au moins l'une des revendications 1 à 9, caractérisée en ce que le palier de pivotement (26) du clapet de chargement pivotant (2) est disposé directement à l'extérieur de la zone de travail (31') des dents (31) du premier cylindre à dents (3).

11. Machine selon au moins l'une des revendications 1 à 10, caractérisée en ce que le clapet de chargement pivotant (2) est actionnable par un cylindre hydraulique (8) qui est disposé sur chaque côté extérieur et dont l'extrémité inférieure (83) est reliée au châssis (11) dans la zone de l'essieu (12) tandis que son extrémité supérieure (82) est reliée au clapet de chargement à distance du palier de pivotement (26).

Fig.1

Fig.2

EP 0 223 004 B1